# EUROPÄISCHE PATENTANMELDUNG

(11) **EP 4 216 075 A1**
(43) Veröffentlichungstag der Anmeldung: **26.07.2023**
(21) Anmeldenummer: 22152350.9
(22) Anmeldetag: 20.01.2022
(51) Int. Cl.: G06F 16/2455, G06F 16/2458, G06N 20/00

(54) **VERFAHREN ZUR BESTIMMUNG VON ÄHNLICHKEITSBEZIEHUNGEN ZWISCHEN TABELLEN**

(71) Anmelder: One Data GmbH, 94032 Passau (DE)
(72) Erfinder:
(74) Vertreter: Wolf, Gerhard

(57) **Zusammenfassung**

Die Erfindung betrifft ein computerimplementiertes Verfahren zur Bestimmung von Ähnlichkeitsbeziehungen zwischen unterschiedlichen Tabellen mittels maschinell lernender Rechenmodule.

## Beschreibung

Die Erfindung betrifft ein computerimplementiertes Verfahren zur Bestimmung von Ähnlichkeitsbeziehungen zwischen Tabellen bzw. Datenquellen, die Tabellen enthalten.

Insbesondere in Unternehmen existieren häufig eine Vielzahl von unterschiedlichen Datenquellen, in denen Informationen in relationalen Datenformaten, insbesondere Tabellen gespeichert werden. Die Datenquellen können beispielsweise aus verschiedenen Geschäftsprozessen oder unterschiedlichen Unternehmensteilen stammen, beispielsweise aus einem PLM-System (PLM: Product-Lifecycle-Management), einem CRM-System (CRM: Customer-Relationship-Management), einem ERP-System (ERP: Enterprise Ressource Planning) etc.

In komplexen Datenansammlungen mit verschiedenen Datenquellen ist es schwierig zu erkennen, welche Informationen überhaupt existieren, wie die Gesamtdaten strukturiert sind, welche Zusammenhänge zwischen den einzelnen Datenquellen bestehen und wie Daten unterschiedlicher Datenquellen miteinander verknüpft werden können, um komplexe Datenzusammenhänge zu erstellen.

Ausgehend hiervon ist es Aufgabe der Erfindung, ein Verfahren anzugeben, das es ermöglicht, Ähnlichkeiten zwischen Informationen unterschiedlicher Datenquellen zu bestimmen und damit die Daten für einen menschlichen Nutzer leichter erfassbar zu machen.

Die Aufgabe wird durch ein Verfahren mit den Merkmalen des unabhängigen Patentanspruchs 1 gelöst. Bevorzugte Ausführungsformen sind Gegenstand der Unteransprüche. Ein Computerprogramm, das einen Programmcode zur Durchführung des Verfahrens zur Bestimmung von Ähnlichkeitsbeziehungen zwischen unterschiedlichen Tabellen enthält, ist Gegenstand des nebengeordneten Patentanspruchs 15.

Gemäß einem ersten Aspekt bezieht sich die Erfindung auf ein computerimplementiertes Verfahren zur Bestimmung von Ähnlichkeitsbeziehungen zwischen unterschiedlichen Tabellen. Das Verfahren umfasst die folgenden Schritte:
Zunächst werden mehrere unterschiedliche Tabellen empfangen. Die Tabellen enthalten Informationen, die in Zeilen und Spalten strukturiert angeordnet sind. In anderen Worten liegen damit relationale Daten vor.

Anschließend werden die Informationen der Tabellen spaltenweise verarbeitet und abstrahiert. Durch das spaltenweise Verarbeiten und Abstrahieren werden spaltenbezogene Metadaten erhalten, die die in einer Spalte der jeweiligen Tabelle enthaltenen Informationen charakterisieren. In anderen Worten sind die spaltenbezogenen Metadaten aus den Informationen der Spalten abgeleitete Informationen, die zusätzliche Daten zu den Spalteninformationen liefern. Die Metadaten können beispielsweise Basismetadaten oder aber komplexe Metadaten sein. Basismetadaten können beispielsweise Spaltennamen, Datentyp der in der Spalte enthaltenen Werte, Anzahl unterschiedlicher Werte in der Spalte, Anzahl der Nullwerte in der Spalte, kleinster Spaltenwert, größter Spaltenwerte etc. sein. Die komplexen Metadaten können beispielsweise Informationen umfassen, die durch Berechnung oder Analyse aus den Basismetadaten ermittelt werden. Die komplexen Metadaten können beispielsweise minimale Länge der Spaltenwerte, maximale Länge der Spaltenwerte, minimale Anzahl der Buchstaben in den Spaltenwerten, maximale Anzahl der Buchstaben in den Spaltenwerten, minimale Anzahl von Ziffern in den Spaltenwerten, maximale Anzahl von Ziffern in den Spaltenwerten, durchschnittliches Verhältnis aus Ziffern und Zahlen in den Spaltenwerten etc. sein.

Es werden mehrere maschinell lernende Rechenmodule bereitgestellt. Zumindest ein Teil der maschinell lernenden Rechenmodule sind vortrainierte Rechenmodule und/oder zumindest ein Teil der maschinell lernenden Rechenmodule müssen erst durch die Tabelleninformationen trainiert werden. Ein Teil der maschinell lernenden Rechenmodule wird beispielsweise dadurch trainiert, dass ein Teil der spaltenbezogenen Metadaten zumindest einem Teil der maschinell lernenden Rechenmodule zugeführt wird, um diese auf Muster zu trainieren, die in den spaltenbezogenen Metadaten enthalten sind.

Anschließend werden die spaltenbezogenen Metadaten, insbesondere sämtliche spaltenbezogenen Metadaten den trainierten Rechenmodulen zugeführt. Die einzelnen Rechenmodule ermitteln zu den Spalten einer Tabelle jeweils zumindest einen Musterindikator. Der Musterindikator ist eine Kenngröße für das Vorhandensein eines Musters in der jeweiligen Spalte einer Tabelle. Der Musterindikator kann beispielsweise indizieren, ob in der jeweiligen Spalte Informationen enthalten sind, die beispielsweise einer email-Adresse, Kontoverbindungsdaten oder einer Telefonnummer etc. ähnlich sind.

Anschließend werden mehrere Musterindikatoren, die von unterschiedlichen trainierten Rechenmodulen erzeugt wurden und sich jeweils auf dieselbe Spalte der jeweiligen Tabelle beziehen, aggregiert. Es werden also mehrere Musterindikatoren gesammelt, die aus unterschiedlichen Rechenmodulen stammen. Diese mehreren spaltenbezogenen Musterindikatoren werden kombiniert, wodurch Kombinationsmusterindikatoren gebildet werden, die jeweils einer Spalte einer Tabelle zugeordnet sind. Dadurch wird ein sog. model averaging erreicht, durch das ein overfitting bzw. underfitting von einzelnen Modellen ausgeglichen wird.

Die Kombinationsmusterindikatoren verschiedener Tabellen werden miteinander verglichen, um Ähnlichkeitsbeziehungen zwischen zumindest einem Teil der Spalten der Tabellen herzustellen. Durch den Vergleich von einzelnen Kombinationsmusterindikatoren lässt sich feststellen, ob einzelne Spalten eine Ähnlichkeitsbeziehung aufweisen bzw. wie hoch der Grad der Ähnlichkeit ist. Durch den Vergleich der für die jeweiligen Spalten einer Tabelle ermittelten Kombinationsmusterindikatoren lässt sich die Gesamtähnlichkeit der einzelnen Tabellen bestimmen.

Zuletzt wird basierend auf dem Vergleich der Kombinationsmusterindikatoren zumindest ein Ähnlichkeitswert berechnet, der die Ähnlichkeit zwischen Spalten unterschiedlicher Tabellen charakterisiert. Alternativ oder zusätzlich wird basierend auf dem Vergleich der Kombinationsmusterindikatoren zumindest ein Ähnlichkeitswert berechnet, der die Ähnlichkeit zwischen unterschiedlichen Tabellen, die mehrere Spalten enthalten, charakterisiert.

Der technische Vorteil des Verfahrens besteht darin, dass durch die maschinell lernenden Rechenmodule ein Überblick über verteilt gespeicherte Datenstrukturen möglich wird, der die bestehenden Zusammenhänge erkennbar macht, und zwar ohne dass die Daten in einer gemeinsamen Datenbank zusammengeführt werden müssen, sondern an ihren jeweiligen Speicherorten verbleiben können. Durch die maschinell lernenden Rechenmodule ist es zudem möglich, automatisch und adaptiv Datenzusammenhänge zu erkennen und damit das Verhältnis der einzelnen Daten zueinander zu erfassen.

Gemäß einem Ausführungsbeispiel wird durch das spaltenweise Verarbeiten und Abstrahieren der Informationen die Länge einer Zeichenkette, der Datentyp der Informationen, der Wertebereich der Informationen, das Verhältnis aus Buchstaben und Zahlen, ein Indikator bezüglich der Ähnlichkeit der Werte der Spalte und/oder die Häufigkeit des Vorhandenseins von Sonderzeichen ermittelt. Durch diese spaltenbezogenen Metadaten ist es möglich, Datenzusammenhänge zu ermitteln, die aus den Rohdaten selbst nur unzulänglich zu ermitteln sind.

Gemäß einem Ausführungsbeispiel werden die maschinell lernenden Rechenmodule beim Training mit einem Teil der spaltenbezogenen Metadaten durch einen unüberwachten Lernprozess trainiert (sog. unsupervised machine learning). Dadurch ist ein Training der Rechenmodule ohne ein vorheriges sog. labeling der Trainingsdaten möglich.

Gemäß einem Ausführungsbeispiel wird das Training der maschinell lernenden Rechenmodule in mehreren Schritten vollzogen, wobei in den Trainingsschritten jeweils eine Teilmenge der gesamten spaltenbezogenen Metadaten als Trainingsdaten verwendet werden und in aufeinanderfolgenden Trainingsschritten jeweils zumindest teilweise unterschiedliche Trainingsdaten durch Verändern der Teilmenge der gesamten spaltenbezogenen Metadaten verwendet werden. Dadurch können die Rechenmodule verbessert auf die insgesamt vorhandenen spaltenbezogenen Metadaten trainiert werden.

Gemäß einem Ausführungsbeispiel weisen die maschinell lernenden Rechenmodule zumindest teilweise eine unterschiedliche Struktur auf.

Beispielsweise können die maschinell lernenden Rechenmodule eine unterschiedliche Anzahl von Layern (z.B. Schichten eines neuronalen Netzes) und/oder eine unterschiedliche Anzahl von Neuronen (auch als "Features" bezeichnet) in den jeweiligen Layern aufweisen. Dadurch ist es möglich, dass die maschinell lernenden Rechenmodule jeweils unterschiedliche Muster in den Tabellen bzw. deren Metadaten erkennen können.

Gemäß einem Ausführungsbeispiel sind die maschinell lernenden Rechenmodule zumindest teilweise neuronale Netze. Neuronale Netze lassen sich vorteilhaft zum Erkennen von Mustern in Zeichenketten trainieren. Alternativ können auch andere Strukturen, die ein maschinelles Lernen ermöglichen, in den Rechenmodulen verwendet werden, beispielsweise Ensemble Modelle mit Random Forest oder Boosted Trees.

Gemäß einem Ausführungsbeispiel wird beim Vergleichen der Kombinationsmusterindikatoren unterschiedlicher Spalten geprüft, wie hoch der Grad der Übereinstimmung der Kombinationsmusterindikatoren ist. Beispielsweise ist der Kombinationsmusterindikator ein Zahlenwert. Durch das Vergleichen der Zahlenwerte lässt sich ermitteln, wie hoch der Grad der Ähnlichkeit von Spalten unterschiedlicher Tabellen ist.

Gemäß einem Ausführungsbeispiel werden semantische Tabelleneigenschaften basierend auf Spaltenbezeichnungen, Tabellenbezeichnungen und/oder ein oder mehreren Kommentaren, die der Tabelle zugeordnet sind, ermittelt. Die semantischen Tabelleneigenschaften können den Inhalt einer Tabelle indizieren. Aus den semantischen Tabelleneigenschaften lassen sich Rückschlüsse ziehen, welche Daten in der Tabelle gespeichert sind. Diese Informationen können dann zur Bestimmung von Ähnlichkeitsbeziehungen zwischen den Tabellen verwendet werden.

Gemäß einem Ausführungsbeispiel wird der Ähnlichkeitswert, der die Ähnlichkeit zwischen Spalten unterschiedlicher Tabellen oder die Ähnlichkeit zwischen unterschiedlichen Tabellen charakterisiert, basierend auf den semantischen Tabelleneigenschaften ermittelt. Damit werden die semantischen Tabelleneigenschaften zusätzlich zu den Musterindikatoren, die durch die maschinell lernenden Rechenmodulen ermittelt wurden, dazu herangezogen, die Ähnlichkeit von Tabellen bzw. deren Spalten zu bestimmen.

Gemäß einem Ausführungsbeispiel sind die vortrainierten maschinell lernenden Rechenmodule basierend auf Trainingsdaten, die von den spaltenbezogenen Metadaten der empfangenen Tabellen verschieden sind und vorgegebene Muster enthalten, vorab trainiert worden. Die vortrainierten maschinell lernenden Rechenmodule sind vorzugsweise dazu ausgebildet, definierte Muster wie beispielsweise Emailadressen oder Kontoverbindungsdaten zu erkennen. Diese Rechenmodule lassen sich durch Daten, die derartige definierte Muster (Pattern) enthalten, vorteilhaft trainieren und können als vortrainierte Rechenmodule dann in dem Verfahren eingesetzt werden, um die Muster zu erkennen, für die sie vorab trainiert wurden. Dadurch können global oder regional genormte Muster in den Daten verbessert erkannt werden.

Gemäß einem Ausführungsbeispiel werden nach dem Berechnen des zumindest einen Ähnlichkeitswerts die maschinell lernenden Rechenmodule dadurch nachtrainiert, dass der berechnete Ähnlichkeitswert evaluiert und eine Evaluierungsinformation erzeugt wird. Basierend auf der Evaluierungsinformation können die maschinell lernenden Rechenmodule angepasst werden. Alternativ oder zusätzlich kann der Algorithmus zum Bilden von Kombinationsmusterindikatoren angepasst werden. Damit ist es möglich, die maschinell lernenden Rechenmodule abhängig von den erkannten Ähnlichkeitsbeziehungen nachzutrainieren, d.h. beispielsweise die Gewichte des neuronalen Netzes derart anzupassen, dass die Erkennung von Ähnlichkeitsbeziehungen verbessert wird. Zudem ist es möglich, basierend auf den Evaluierungsinformationen die Gewichtung der einzelnen Musterindikatoren bei der Berechnung der Kombinationsmusterindikatoren derart anzupassen, dass der berechnete Ähnlichkeitswert die tatsächlich vorliegende Ähnlichkeit der Spalten besser nachbildet.

Gemäß einem Ausführungsbeispiel werden beim Bilden von Kombinationsmusterindikatoren die Musterindikatoren unterschiedlich gewichtet. Dadurch können die Ergebnisse bestimmter Rechenmodule stärker gewichtet werden als die Ergebnisse der anderen Rechenmodule. Insbesondere kann die Gewichtung adaptiv angepasst werden, und zwar beispielsweise aufgrund von semantischen Tabelleninformationen, die ein Indiz dafür liefern, dass bestimmte Rechenmodule ein genaueres Ergebnis liefern werden als andere (z.B. auf Kontodaten trainierte Rechenmodule für die Daten einer Spalte mit dem Spaltennamen "Kontonummer").

Gemäß einem Ausführungsbeispiel wird basierend auf den Tabellen und den Ähnlichkeitsbeziehungen der Tabellen eine graphische Ausgabe erzeugt wird, die die Ähnlichkeitsbeziehungen der Gesamttabellen und der Spalten der einzelnen Tabellen darstellt. Die Darstellung kann beispielsweise eine kartenartige Darstellung sein, die die in einer Organisation, beispielsweise einem Unternehmen, vorhandenen Daten erfasst und zueinander in eine kontextabhängige Verbindung setzt. Die kartenartige Darstellung kann beispielsweise mehrere Layer aufweisen, mittels denen sich die Daten in unterschiedlichen Abstraktionsleveln darstellen lassen. Dadurch können die in einer Organisation vorhandenen Daten für den menschlichen Nutzer leichter erfassbar dargestellt werden.

Gemäß einem Ausführungsbeispiel werden bei einer Änderung der in den Tabellen enthaltenen Informationen die spaltenbezogene Metadaten, die Musterindikatoren und die daraus resultierenden Kombinationsmusterindikatoren neu ermittelt und basierend darauf wird der Ähnlichkeitswert, der die Ähnlichkeit zwischen Spalten unterschiedlicher Tabellen und/oder die Ähnlichkeit zwischen unterschiedlichen Tabellen charakterisiert, neu berechnet. Damit können die Ähnlichkeitsbeziehungen von Spalten unterschiedlicher Tabellen bzw. Ähnlichkeitsbeziehungen zwischen verschiedenen Tabellen iterativ angepasst werden, beispielsweise dann, wenn sich die Tabellendaten ändern bzw. neue Tabellen entstehen.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft und schematisch ein Beispiel einer Datenstruktur mit mehreren Datenquellen;
- Fig. 2: beispielhaft mehrere Tabellen mit unterschiedlichen Daten, wobei die Tabellen durch Informationsbeziehungen miteinander verbunden sind;
- Fig. 3: beispielhaft und schematisch ein System zur Bestimmung von Ähnlichkeitsbeziehungen zwischen mehreren Tabellen;
- Fig. 4: beispielhaft eine kartenartige Darstellung von Ähnlichkeitsbeziehungen zwischen unterschiedlichen Datenquellen in einem Unternehmen in einem ersten Layer;
- Fig. 5: beispielhaft eine kartenartige Darstellung von Ähnlichkeitsbeziehungen zwischen unterschiedlichen Datenquellen in einem Unternehmen in einem zweiten Layer; und
- Fig. 6: beispielhaft ein Ablaufdiagramm, das die Schritte eines Verfahrens zur Bestimmung von Ähnlichkeitsbeziehungen zwischen unterschiedlichen Tabellen veranschaulicht.

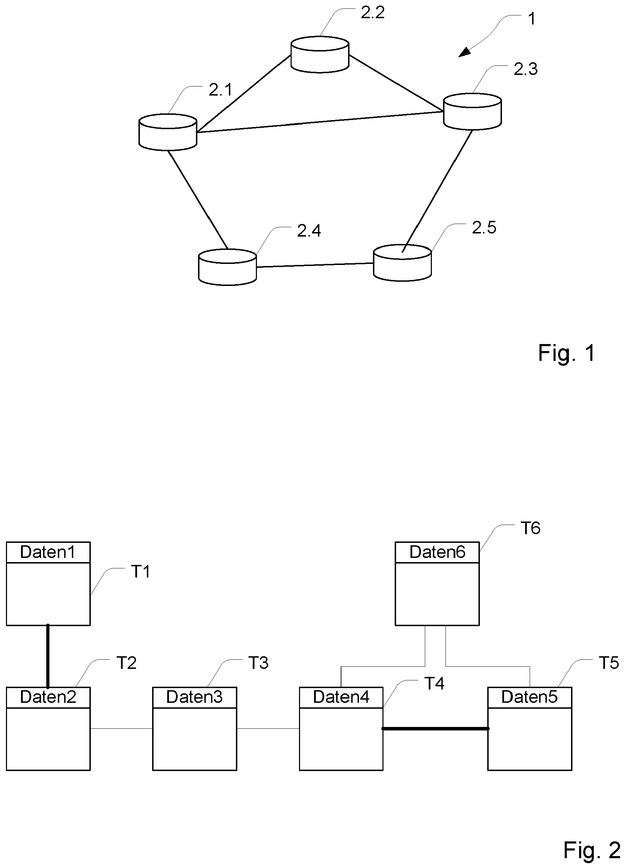

Figur 1 zeigt beispielhaft eine Anordnung zur Datenspeicherung 1 in einem Unternehmen, das eine Vielzahl von Datenquellen 2.1 bis 2.5 umfasst. Die Datenquellen 2.1 bis 2.5 sind beispielsweise Datenbanken, in denen die Informationen in relationalen Datenformaten, d.h. in Form von Tabellen gespeichert werden. Wie durch die Linien angedeutet, sind die Datenquellen 2.1 bis 2.5 miteinander verbunden, um Informationen untereinander auszutauschen.

Fig. 2 zeigt beispielhaft und schematisch mehrere Tabellen T1 - T6, deren Inhalt beispielhaft mit "Daten1" bis "Daten6" bezeichnet ist. Die Linien zwischen den Tabellen T1 - T6 geben an, dass zwischen den einzelnen Tabellen Informationsbeziehungen bestehen. Wie durch die unterschiedlichen Linienstärken angedeutet, können die Informationsbeziehungen zwischen den Tabellen T1 - T6 unterschiedlicher Art sein. Den Tabellen T1 - T6 können Basisinformationen zugeordnet sein, die die in der jeweiligen Tabelle enthaltenen Informationen charakterisieren. Die Basisinformationen der Tabelle können beispielsweise deren Titel, Tabellenbeschreibung und/oder Spaltenbezeichnungen in der Tabelle sein. So können sich die Tabellen T2 und T3 jeweils beispielsweise auf von Kunden aufgegebene Bestellungen beziehen, wobei zu der Tabelle T2 beispielsweise durch den Tabellentitel oder eine Tabellenbeschreibung bekannt ist, dass sich die Tabelle T2 beispielsweise auf Bestellgrundinformationen und die Tabelle T3 auf Detailinformationen zu den Bestellungen bezieht. Damit ist allein aus diesen Basisinformationen der Tabellen T2 und T3 erkennbar, dass die Tabellen T2 und T3 miteinander in Beziehung stehen (angedeutet durch eine dünn gezeichnete Verbindungslinie).

Den Tabellen T1 und T2 hingegen sind beispielsweise keine Basisinformationen zugeordnet, die indizieren, dass zwischen den Tabellen eine Beziehung besteht. So bezieht sich beispielsweise die Tabelle T1 auf eine Datenprotokollierung und die Tabelle T2 auf Detailinformationen zu Bestellungen. Aus den Basisinformationen der Tabellen T1 und T2 (beispielsweise Titel, Tabellenbeschreibung etc.) ist nicht erkennbar, dass diese Tabellen miteinander in Beziehung stehen und beispielsweise einzelne Spalten der Tabellen eine hohe Übereinstimmung aufweisen (angedeutet durch die fett gedruckte Verbindungslinie zwischen den Tabellen T1 und T2).

Gleiches gilt beispielsweise für die Tabellen T4 und T5, die beide keine Informationsbeziehungen aufgrund von Basisinformationen haben sondern nicht direkt erkennbare Informationsbeziehungen, die mittels maschinell lernender Algorithmen erkennbar sind.

Die Ähnlichkeitsbeziehung der Tabellen T1 bis T6 insgesamt bzw. die Ähnlichkeitsbeziehung zumindest einzelner Spalten der Tabellen kann mit dem nachfolgend näher beschriebenen Verfahren, das maschinell lernende Rechenmodule nutzt, ermittelt werden.

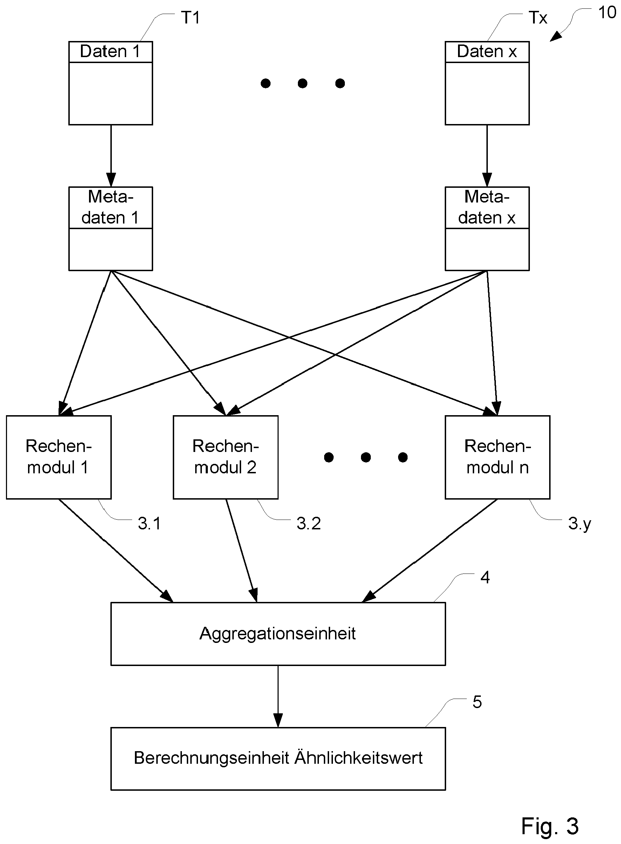

Fig.3 zeigt ein schematisches Diagramm, das die Funktionseinheiten eines Systems 10 zur Bestimmung von Ähnlichkeitsbeziehungen zwischen unterschiedlichen Tabellen veranschaulicht.

Zunächst werden die Tabellen T1 bis Tx (wobei x eine natürliche Zahl ist) analysiert und Metadaten zu den einzelnen Spalten dieser Tabellen erzeugt. Die Metadaten können Basismetadaten und/oder komplexe Metadaten aufweisen. Die Basismetadaten sind beispielsweise Informationen, die direkt aus einer Spalte der Tabelle ermittelt werden können, beispielsweise Spaltennamen, Datentyp der in der Spalte enthaltenen Werte (String, Nummern, ganzzahlige Werte, Gleitkomma-Werte etc.), Anzahl unterschiedlicher Werte in der Spalte, Anzahl der Nullwerte in der Spalte, kleinster Spaltenwert, größter Spaltenwerte etc.. Die komplexen Metadaten können beispielsweise Informationen umfassen, die durch Berechnung oder Analyse aus den Basismetadaten ermittelt werden. Die komplexen Metadaten können beispielsweise sein: minimale Länge der Spaltenwerte, maximale Länge der Spaltenwerte, minimale Anzahl der Buchstaben in den Spaltenwerten, maximale Anzahl der Buchstaben in den Spaltenwerten, minimale Anzahl von Ziffern in den Spaltenwerten, maximale Anzahl von Ziffern in den Spaltenwerten, durchschnittliches Verhältnis aus Ziffern und Zahlen in den Spaltenwerten etc.

Des Weiteren kann die Erzeugung von Metadaten auch das Bestimmen von Basisinformationen umfassen. Diese Basisinformationen können sich entweder auf die einzelnen Spalten der Tabellen und/oder auf die jeweilige Tabelle insgesamt beziehen. Die Basisinformationen können beispielsweise semantische Informationen umfassen, d.h. Informationen, die die Bedeutung von sprachlichen Zeichen und Zeichenfolgen in der Tabelle angeben. Die Basisinformationen können beispielsweise Informationen zu dem Tabellennamen, zu den Spaltennamen und/oder zu Kommentaren bzw. Tabellenbeschreibungen enthalten. Beispielsweise können die Basisinformationen angeben, welche Spaltentitel die Spalten einer Tabelle aufweisen, wie oft ein bestimmtes Wort in den Spaltentiteln vorkommt etc.

Vorzugsweise werden die ermittelten Metadaten selbst in einer Datenbank gespeichert, und zwar derart, dass diese der Tabelle zugeordnet sind, deren Metadaten sie umfassen.

Wie in Fig. 3 ersichtlich, weist das System 10 mehrere maschinell lernende Rechenmodule 3.1 - 3.y auf. Die maschinell lernenden Rechenmodule 3.1 - 3.y können beispielsweise künstliche neuronale Netze sein. Alternativ können zumindest teilweise auch andere Arten von maschinell lernenden Rechenmodulen verwendet werden, beispielsweise Ensemble Modelle mit Random Forest oder Boosted Trees.

Die maschinell lernenden Rechenmodule 3.1 - 3.y sind unterschiedlich ausgebildet bzw. konfiguriert. Beispielsweise können die maschinell lernenden Rechenmodule 3.1 - 3.y eine unterschiedliche Architektur aufweisen, d.h. beispielsweise eine unterschiedliche Anzahl von Layer und/oder eine unterschiedliche Anzahl von Neuronen in den jeweiligen Layer aufweisen. Dadurch wird erreicht, dass die maschinell lernenden Rechenmodule 3.1 - 3.y aufgrund der verschiedenen Struktur bei gleichen Eingangsinformationen unterschiedliche Ausgangsinformationen generieren. So kann beispielsweise ein maschinell lernendes Rechenmodul eine bessere Erkennung von charakteristischen Buchstaben-Zahlen-Folgen, ein anderes maschinell lernendes Rechenmodul hingegen eine bessere Erkennung von Emailadressen ermöglichen.

Die maschinell lernenden Rechenmodule 3.1 - 3.y müssen zur Erkennung von charakteristischen Mustern (auch Pattern genannt) in den Metadaten der Tabellen T1 bis Tx vorab trainiert sein.

Das Training der maschinell lernenden Rechenmodule 3.1 - 3.y kann auf unterschiedliche Art und Weise erfolgen.

Zumindest ein Teil der maschinell lernenden Rechenmodule 3.1 - 3.y kann beispielsweise dadurch trainiert sein, dass den maschinell lernenden Rechenmodule 3.1 - 3.y ein Teil der Metadaten der Tabellen T1 bis Tx zugeführt wird und die maschinell lernenden Rechenmodule 3.1 - 3.y auf Basis dieses Teils der Metadaten trainiert wird. Das Training kann beispielsweise mittels eines unüberwachten Lernprozesses (sog. unsupervised learning) erfolgen. Während des unüberwachten Lernprozesses wird durch das maschinell lernende Rechenmodul versucht, in den Eingabedaten Muster zu erkennen, die vom strukturlosen Rauschen abweichen und die Gewichte des maschinell lernenden Rechenmoduls derart anzupassen, dass diese erkannten Muster durch das maschinell lernende Rechenmodul besser erfasst werden.

Alternativ kann das Training auch mittels eines überwachten Lernprozesses erfolgen, in dem eine Mustererkennung durch eine Person überprüft und das Überprüfungsergebnis als Trainingsfeedback dem Lernprozess zugeführt wird.

Zudem können die maschinell lernenden Rechenmodule 3.1 - 3.y zumindest teilweise vortrainierte Module sein, d.h. unabhängig von den aktuell empfangenen Metadaten für die Erkennung bestimmter Muster (z.B. Bank Identifier Code (BIC), International Bank Account Number (IBAN), Emailadressen etc.) vortrainiert sein und als solche vortrainierte Rechenmodule ohne weiteres Training in dem System 10 eingesetzt werden.

Nach dem Empfang der Metadaten zu den jeweiligen Tabellen T1 bis Tx werden durch die trainierten maschinell lernenden Rechenmodule 3.1 - 3.y Musterindikatoren erzeugt. Die Musterindikatoren sind spaltenbezogene Musterindikatoren, d.h. die Musterindikatoren geben eine Wahrscheinlichkeit an, dass in der Spalte, auf die sich der Musterindikator bezieht, ein bestimmtes Muster enthalten ist. Beispielsweise kann ein Musterindikator, der das Vorhandensein einer "Postleitzahl" indiziert, einen hohen Wert aufweisen, wenn die Länge der Spaltendaten jeweils fünf Ziffern ist und die Spaltendaten nur aus Zahlen bestehen.

Die Rechenmodule 3.1 - 3.y ermitteln zu den Spalten der Tabellen T1 bis Tx jeweils zumindest einen Musterindikator. Der Musterindikator ist dabei eine Kenngröße für das Vorhandensein eines Musters (Pattern) in der jeweiligen Spalte einer Tabelle. So kann beispielsweise ein Musterindikator indizieren, welche Ähnlichkeit die Spalteneinträge mit einem bestimmten Patterntyp, beispielsweise Postleitzahl, IBAN, Emailadresse etc. haben.

Die von den Rechenmodulen 3.1 - 3.y bereitgestellten Musterindikatoren werden anschließend an eine Aggregationseinheit 4 des Systems 10 übermittelt. Die Aggregationseinheit 4 ist dazu ausgebildet, die von den Rechenmodulen 3.1 - 3.y bereitgestellten Musterindikatoren zu aggregieren und zu kombinieren. Dabei bedeutet "aggregieren", dass mehrere Ergebnisse der Rechenmodule zusammengefasst werden, um Zusammenhänge zwischen den Einzelergebnissen zu erkennen. Durch das Kombinieren der aggregierten Musterindikatoren werden Kombinationsmusterindikatoren gebildet. Das Kombinieren der aggregierten Musterindikatoren kann beispielsweise die Bildung von Durchschnittswerten umfassen. Dadurch wird ein sog. "model averaging" erreicht, d.h. aus den Ergebnissen unterschiedlicher Modelle, die unterschiedliche Güte im Erkennen von den jeweiligen Pattern aufweisen können, wird ein Durchschnittswert ermittelt, der den Kombinationsmusterindikator bildet und einer Spalte einer Tabelle zugeordnet ist. Damit kann ein sog. overfitting/overestimation bzw. underfitting/underestimation von einzelnen Rechenmodulen 3.1 - 3.y ausgeglichen werden.

Die von der Aggregationseinheit 4 berechneten Kombinationsmusterindikatoren werden anschließend einer Berechnungseinheit 5 zugeführt. Die Berechnungseinheit 5 ist dazu ausgebildet, Ähnlichkeitsbeziehungen zwischen zumindest Teilen von mehreren Tabellen durch Vergleichen der Kombinationsmusterindikatoren von Spalten dieser Tabellen zu bestimmen. Nach dem Vergleichen der Kombinationsmusterindikatoren ermittelt die Berechnungseinheit 5 basierend auf den Kombinationsmusterindikatoren einen Ähnlichkeitswert. Dieser Ähnlichkeitswert indiziert den Grad der Ähnlichkeit von Spalten unterschiedlicher Tabellen, die Ähnlichkeit von Spaltengruppen unterschiedlicher Tabellen und/oder die Ähnlichkeit zwischen unterschiedlichen Gesamttabellen. Damit ist der Ähnlichkeitswert ein Maßstab für die Ähnlichkeit von Tabellen oder von Teilbereichen von Tabellen, der dazu verwendet werden kann, die Ähnlichkeiten graphisch zu veranschaulichen und damit für den menschlichen Nutzer besser verständlich zu machen.

Die maschinell lernenden Rechenmodule 3.1 - 3.y können zusätzlich zu den zum Training verwendeten Metadaten weitere Informationen empfangen, die als Trainingsdaten verwendet werden. Beispielsweise können die Basisinformationen (z.B. semantische Informationen wie Tabellennamen, Spaltennamen, Kommentare und/oder Tabellenbeschreibungen) dazu verwendet werden, die Modelle zu trainieren. Dadurch ist es möglich, die Rechenmodule 3.1 - 3.y in verbesserter Weise an die in den Daten verwendeten Formate, Zusammenhänge und/oder Inhalte anzupassen.

Zudem können die maschinell lernenden Rechenmodule 3.1 - 3.y auf Basis von normierten Datenformaten (Email, IBAN, BIC) trainiert werden, um diese Datenformate besser erkennen zu können. Unter "normierten Datenformaten" werden dabei sowohl Datenformate verstanden, die allgemein und nutzerunabhängig normiert sind, aber auch nutzerspezifisch normierte Datenformate, d.h. Datenformate, die in Datensätzen eines bestimmten Nutzers mehrfach in unterschiedlichen Datenquellen vorkommen.

Basierend auf den trainierten maschinell lernenden Rechenmodulen 3.1 - 3.y ist es möglich, die in den unterschiedlichen Datenquellen 2.1 - 2.5 vorhandenen Daten hinsichtlich Ähnlichkeitsbeziehungen zu untersuchen. So ist es beispielsweise möglich, zu einer vorgegebenen Spalte weitere Spalten in den Daten zu ermitteln, die einen ähnlichen Inhalt haben und daher eine Partnerspalte mit hinreichender Ähnlichkeit bilden. Darüber hinaus können zu jeder Spalte eines Datensatzes Spalten von anderen Datensätzen ermittelt werden, die ähnlichen Informationsgehalt haben. Dadurch können Ähnlichkeitsbeziehungen zwischen den unterschiedlichen Datenquellen 2.1 - 2.5 ermittelt und graphisch veranschaulicht werden.

Um auf Veränderungen der in den Datenquellen 2.1 - 2.5 gespeicherten Daten und deren Beziehungen zueinander reagieren zu können, wird das Verfahren vorzugsweise iterativ durchgeführt.

In den Iterationsschritten können beispielsweise basierend auf den vorhandenen, trainierten, maschinell lernenden Rechenmodulen 3.1 - 3.y die in den Datenquellen gespeicherten Daten jeweils erneut analysiert und spaltenbezogene Musterindikatoren ermittelt werden. Aus diesen neu berechneten, spaltenbezogenen Musterindikatoren der einzelnen Rechenmodule 3.1 - 3.y lassen sich aktualisierte Kombinationsmusterindikatoren ermitteln.

Durch das Vergleichen der aktualisierten Kombinationsmusterindikatoren können aktualisierte Ähnlichkeitswerte berechnet werden, die die Ähnlichkeitsbeziehungen von Spalten, Teilen von Tabellen oder Gesamttabellen angeben.

Es können in den Iterationsschritten zudem die maschinell lernenden Rechenmodule 3.1 - 3.y neu trainiert werden, falls die Veränderung der Daten dies erforderlich machen sollte.

Um die zeitliche Veränderung der Daten bzw. die zeitliche Veränderung der Ähnlichkeit der Daten zu ermitteln, kann die zeitliche Veränderung der Ähnlichkeitswerte protokolliert werden, so dass die Chronologie der Datenveränderung zu einem späteren Zeitpunkt nachvollzogen werden kann.

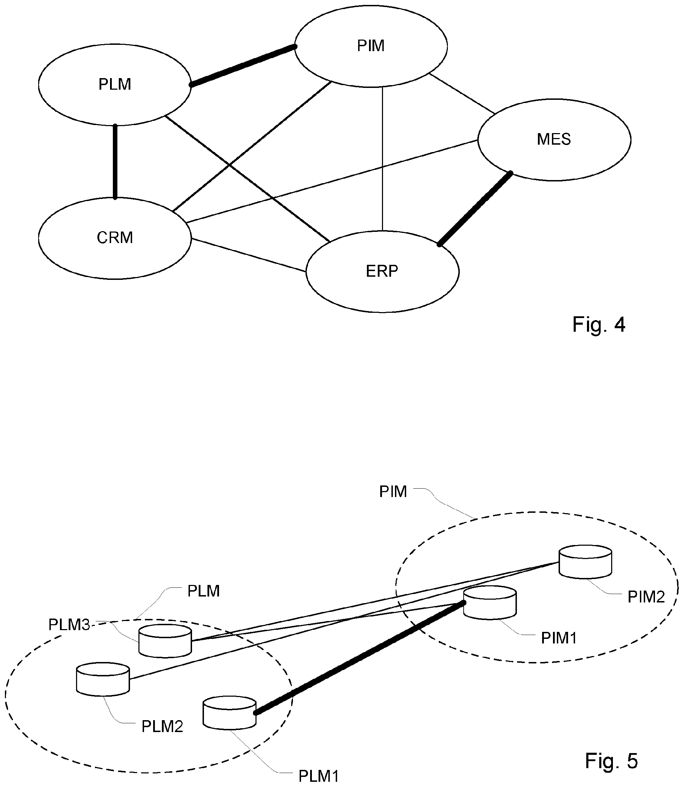

Fig. 4 zeigt beispielhaft eine Darstellung einer visuellen Veranschaulichung von Ähnlichkeitsbeziehungen zwischen Daten in unterschiedlichen Datenquellen 2.1 - 2.5. Die Veranschaulichung erfolgt mittels einer interaktiven Karte, die ähnlich einer kartographischen Karte aufgebaut ist und die mehrere Abstraktionslevel aufweist. Der Nutzer kann durch das Wählen von Abstraktionsleveln die Informationsdichte anpassen und die Granularität der Daten verändern.

Wie in Fig. 4 gezeigt, können beispielsweise auf der obersten Ebene die Datenquellen von einzelnen Softwaremodulen dargestellt sein, beispielsweise ERP (Enterprise Resource Planning), PLM (Product Lifecycle Management), CRM (Customer Relationship Management), PIM (Product Information Management) und MES (Machine Execution System). Die Linienstärken zwischen den einzelnen Datenquellen geben beispielsweise an, wie hoch die Ähnlichkeit der Daten zwischen den einzelnen Datenquellen insgesamt ist.

Fig. 5 zeigt beispielhaft die Ähnlichkeitsbeziehungen zwischen den Datenquellen PIM und PLM eine Abstraktionsebene tiefer. Die Linienstärken zwischen den einzelnen Datenquellen geben wiederum die Ähnlichkeit der Daten an. Daraus ist ersichtlich, dass die starke Ähnlichkeit der Datenquellen PIM und PLM hauptsächlich aus der hohen Ähnlichkeit der Sub-Datenquellen PIM1 mit PLM1 stammt und die übrigen Subdatenquellen lediglich geringe Ähnlichkeiten aufweisen.

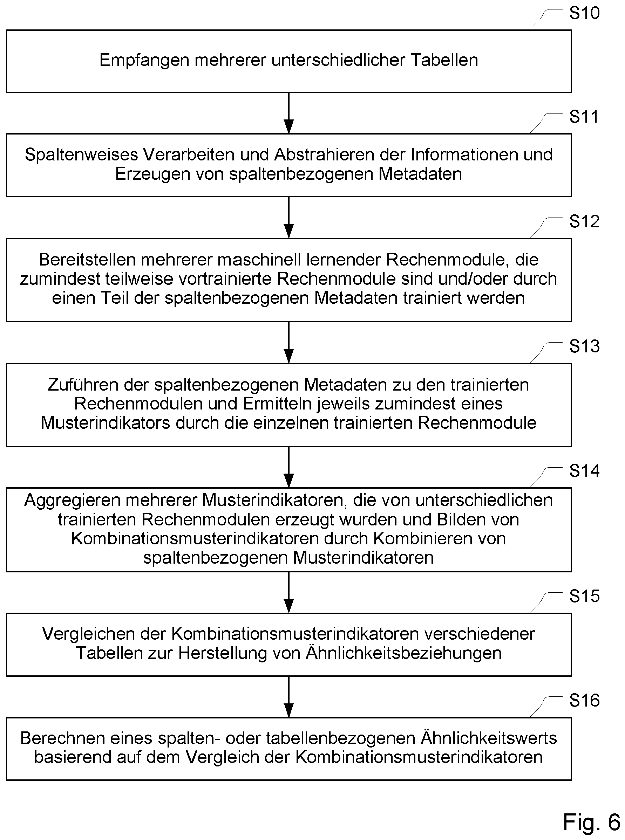

Fig. 6 zeigt ein Blockdiagramm, das die Schritte des Verfahrens zur Bestimmung von Ähnlichkeitsbeziehungen zwischen unterschiedlichen Tabellen verdeutlicht.

Zunächst werden mehrere unterschiedliche Tabellen empfangen. Die Tabellen enthalten Informationen, die in Zeilen und Spalten strukturiert angeordnet sind (S10).

Anschließend werden die Informationen spaltenweise verarbeitet und abstrahiert. Durch das spaltenweise Verarbeiten und Abstrahieren werden spaltenbezogene Metadaten ermittelt, die die in einer Spalte der jeweiligen Tabelle enthaltenen Informationen charakterisieren (S11).

Zudem werden mehrere maschinell lernende Rechenmodule bereitgestellt. Zumindest ein Teil der maschinell lernenden Rechenmodule sind vortrainierte Rechenmodule und/oder zumindest ein Teil der maschinell lernenden Rechenmodule wird dadurch trainiert, dass ein Teil der spaltenbezogenen Metadaten zumindest einem Teil der maschinell lernenden Rechenmodule zugeführt wird, um diese auf in den spaltenbezogenen Metadaten enthaltene Muster zu trainieren und damit trainierte Rechenmodule zu erhalten (S12).

Zu den trainierten Rechenmodulen werden die spaltenbezogenen Metadaten zugeführt, wobei die einzelnen Rechenmodule basierend auf den spaltenbezogenen Metadaten zu den Spalten einer Tabelle jeweils zumindest einen Musterindikator ermitteln, der eine Kenngröße für das Vorhandensein eines Musters in der jeweiligen Spalte einer Tabelle ist (S13).

Anschließend werden mehrere Musterindikatoren, die von unterschiedlichen trainierten Rechenmodulen erzeugt wurden und sich jeweils auf dieselbe Spalte der jeweiligen Tabelle beziehen, aggregiert, und kombiniert, wodurch Kombinationsmusterindikatoren gebildet werden, die jeweils einer Spalte einer Tabelle zugeordnet sind (S14).

Daraufhin werden die Kombinationsmusterindikatoren verschiedener Tabellen verglichen, um Ähnlichkeitsbeziehungen zwischen zumindest einem Teil der Spalten der Tabellen herzustellen (S15).

Zuletzt erfolgt basierend auf dem Vergleich der Kombinationsmusterindikatoren ein Berechnen zumindest eines Ähnlichkeitswerts, der die Ähnlichkeit zwischen Spalten unterschiedlicher Tabellen charakterisiert und/oder es wird zumindest ein Ähnlichkeitswert berechnet, der die Ähnlichkeit zwischen unterschiedlichen Tabellen, die mehrere Spalten enthalten, charakterisiert (S16).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Anordnung zur Datenspeicherung
- 2.1 - 2.5: Datenquellen
- 3.1 - 3.y: Rechenmodul
- 4: Aggregationseinheit
- 5: Berechnungseinheit
- 10: System

- T1 - T6: Tabelle

## Patentansprüche

1. Computerimplementiertes Verfahren zur Bestimmung von Ähnlichkeitsbeziehungen zwischen unterschiedlichen Tabellen (T1 - T5), umfassend folgende Schritte:
- Empfangen mehrerer unterschiedlicher Tabellen (T1 - T5), wobei die Tabellen (T1 - T5) in Zeilen und Spalten strukturiert angeordnete Informationen enthalten (S10);
- Spaltenweises Verarbeiten und Abstrahieren der Informationen, wobei durch das spaltenweise Verarbeiten und Abstrahieren spaltenbezogene Metadaten ermittelt werden, die die in einer Spalte der jeweiligen Tabelle (T1 - T5) enthaltenen Informationen charakterisieren (S11);
- Bereitstellen mehrerer maschinell lernender Rechenmodule (3.1 - 3.y), wobei zumindest ein Teil der maschinell lernenden Rechenmodule (3.1 - 3.y) vortrainierte Rechenmodule sind und/oder zumindest ein Teil der maschinell lernenden Rechenmodule (3.1 - 3.y) dadurch trainiert wird, dass ein Teil der spaltenbezogenen Metadaten zumindest einem Teil der maschinell lernenden Rechenmodule (3.1 - 3.y) zugeführt wird, um diese auf in den spaltenbezogenen Metadaten enthaltene Muster zu trainieren und damit trainierte Rechenmodule zu erhalten (S12);
- Zuführen der spaltenbezogenen Metadaten zu den trainierten Rechenmodulen, wobei die einzelnen Rechenmodule zu den Spalten einer Tabelle (T1 - T5) jeweils zumindest einen Musterindikator ermitteln, der eine Kenngröße für das Vorhandensein eines Musters in der jeweiligen Spalte einer Tabelle ist (S13);
- Aggregieren mehrerer Musterindikatoren, die von unterschiedlichen trainierten Rechenmodulen (3.1 - 3.y) erzeugt wurden und sich jeweils auf dieselbe Spalte der jeweiligen Tabelle (T1 - T5) beziehen und Kombinieren dieser spaltenbezogenen Musterindikatoren, wodurch Kombinationsmusterindikatoren gebildet werden, die jeweils einer Spalte einer Tabelle (T1 - T5) zugeordnet sind (S14);
- Vergleichen der Kombinationsmusterindikatoren verschiedener Tabellen (T1 - T5), um Ähnlichkeitsbeziehungen zwischen zumindest einem Teil der Spalten der Tabellen (T1 - T5) herzustellen (S15);
- Berechnen zumindest eines Ähnlichkeitswerts, der die Ähnlichkeit zwischen Spalten unterschiedlicher Tabellen (T1 - T5) charakterisiert und/oder Berechnen zumindest eines Ähnlichkeitswerts, der die Ähnlichkeit zwischen unterschiedlichen Tabellen (T1 - T5), die mehrere Spalten enthalten, charakterisiert basierend auf dem Vergleich der Kombinationsmusterindikatoren (S16).

2. Verfahren nach Anspruch 1, **dadurch gekennzeichnet, dass** durch das spaltenweise Verarbeiten und Abstrahieren der Informationen die Länge einer Zeichenkette, der Datentyp der Informationen, der Wertebereich der Informationen, das Verhältnis aus Buchstaben und Zahlen, ein Indikator bezüglich der Ähnlichkeit der Werte der Spalte und/oder die Häufigkeit des Vorhandenseins von Sonderzeichen ermittelt wird.

3. Verfahren nach Anspruch 1 oder 2, **dadurch gekennzeichnet, dass** die maschinell lernenden Rechenmodule (3.1 - 3.y) beim Training mit einem Teil der spaltenbezogenen Metadaten durch einen unüberwachten Lernprozess trainiert werden.

4. Verfahren nach einem der vorhergehenden Ansprüche, **dadurch gekennzeichnet, dass** das Training der maschinell lernenden Rechenmodule (3.1 - 3.y) in mehreren Schritten vollzogen wird, wobei in den Trainingsschritten jeweils eine Teilmenge der gesamten spaltenbezogenen Metadaten als Trainingsdaten verwendet werden und in aufeinanderfolgenden Trainingsschritten jeweils zumindest teilweise unterschiedliche Trainingsdaten durch Verändern der Teilmenge der gesamten spaltenbezogenen Metadaten verwendet werden.

5. Verfahren nach einem der vorhergehenden Ansprüche, **dadurch gekennzeichnet, dass** die maschinell lernenden Rechenmodule (3.1 - 3.y) zumindest teilweise eine unterschiedliche Struktur aufweisen.

6. Verfahren nach einem der vorhergehenden Ansprüche, **dadurch gekennzeichnet, dass** die maschinell lernenden Rechenmodule (3.1 - 3.y) zumindest teilweise neuronale Netze sind.

7. Verfahren nach einem der vorhergehenden Ansprüche, **dadurch gekennzeichnet, dass** beim Vergleichen der Kombinationsmusterindikatoren unterschiedlicher Spalten geprüft wird, wie hoch der Grad der Übereinstimmung der Kombinationsmusterindikatoren ist.

8. Verfahren nach einem der vorhergehenden Ansprüche, **dadurch gekennzeichnet, dass** semantische Tabelleneigenschaften basierend auf Spaltenbezeichnungen und/oder Tabellenbezeichnungen ermittelt werden.

9. Verfahren nach Anspruch 8, **dadurch gekennzeichnet, dass** der Ähnlichkeitswert, der die Ähnlichkeit zwischen Spalten unterschiedlicher Tabellen oder die Ähnlichkeit zwischen unterschiedlichen Tabellen charakterisiert, basierend auf den semantischen Tabelleneigenschaften ermittelt wird.

10. Verfahren nach einem der vorhergehenden Ansprüche, **dadurch gekennzeichnet, dass** die vortrainierten maschinell lernenden Rechenmodule (3.1 - 3.y) basierend auf Trainingsdaten, die von den spaltenbezogenen Metadaten der empfangenen Tabellen verschieden sind und vorgegebene Muster enthalten, vorab trainiert wurden.

11. Verfahren nach einem der vorhergehenden Ansprüche, **dadurch gekennzeichnet, dass** nach dem Berechnen des zumindest einen Ähnlichkeitswerts die maschinell lernenden Rechenmodule (3.1 - 3.y) dadurch nachtrainiert werden, dass der berechnete Ähnlichkeitswert evaluiert und eine Evaluierungsinformation erzeugt wird und dass basierend auf der Evaluierungsinformation die maschinell lernenden Rechenmodule (3.1 - 3.y) und/oder das Bilden von Kombinationsmusterindikatoren angepasst werden.

12. Verfahren nach einem der vorhergehenden Ansprüche, **dadurch gekennzeichnet, dass** beim Bilden von Kombinationsmusterindikatoren die Musterindikatoren unterschiedlich gewichtet werden.

13. Verfahren nach einem der vorhergehenden Ansprüche, **dadurch gekennzeichnet, dass** basierend auf den Tabellen (T1 - T5) und den Ähnlichkeitsbeziehungen der Tabellen (T1 - T5) eine graphische Ausgabe erzeugt wird, die die Ähnlichkeitsbeziehungen der Gesamttabellen und der Spalten der einzelnen Tabellen (T1 - T5) darstellt.

14. Verfahren nach einem der vorhergehenden Ansprüche, dass bei einer Änderung der in den Tabellen (T1 - T5) enthaltenen Informationen die spaltenbezogene Metadaten, die Musterindikatoren und die daraus resultierenden Kombinationsmusterindikatoren neu ermittelt und basierend darauf der Ähnlichkeitswert, der die Ähnlichkeit zwischen Spalten unterschiedlicher Tabellen (T1 - T5) und/oder die Ähnlichkeit zwischen unterschiedlichen Tabellen (T1 - T5) charakterisiert, neu berechnet werden.

15. Computerprogramm, umfassend Befehle, die bei der Ausführung des Programms durch einen Computer diesen veranlassen, die Schritte des Verfahrens nach einem der vorhergehenden Ansprüche auszuführen.

## Geänderte Patentansprüche

### Geänderte Patentansprüche gemäss Regel 137(2) EPÜ.

1. Computerimplementiertes Verfahren zur Bestimmung von Ähnlichkeitsbeziehungen zwischen unterschiedlichen Tabellen (T1 - T5) basierend auf einem System (10), das mehrere maschinell lernende Rechenmodule (3.1 - 3.y), eine Aggregationseinheit (4) und eine Berechnungseinheit (5) aufweist, wobei das Verfahren folgende Schritte umfasst:
- Empfangen mehrerer unterschiedlicher Tabellen (T1 - T5), wobei die Tabellen (T1 - T5) in Zeilen und Spalten strukturiert angeordnete Informationen enthalten (S10);
- Spaltenweises Verarbeiten und Abstrahieren der Informationen, wobei durch das spaltenweise Verarbeiten und Abstrahieren spaltenbezogene Metadaten ermittelt werden, die die in einer Spalte der jeweiligen Tabelle (T1 - T5) enthaltenen Informationen charakterisieren (S11);
- Bereitstellen mehrerer maschinell lernender Rechenmodule (3.1 - 3.y), wobei die maschinell lernenden Rechenmodule (3.1 - 3.y) unterschiedlich ausgebildet sind, und zwar derart, dass die maschinell lernenden Rechenmodule (3.1 - 3.y) aufgrund der verschiedenen Struktur bei gleichen Eingangsinformationen andere Ausgangsinformationen erzeugen, wobei zumindest ein Teil der maschinell lernenden Rechenmodule (3.1 - 3.y) vortrainierte Rechenmodule sind und/oder zumindest ein Teil der maschinell lernenden Rechenmodule (3.1 - 3.y) dadurch trainiert wird, dass ein Teil der spaltenbezogenen Metadaten zumindest einem Teil der maschinell lernenden Rechenmodule (3.1 - 3.y) zugeführt wird, um diese auf in den spaltenbezogenen Metadaten enthaltene Muster zu trainieren und damit trainierte Rechenmodule zu erhalten (S12);
- Zuführen der spaltenbezogenen Metadaten zu den trainierten Rechenmodulen, wobei die einzelnen Rechenmodule zu den Spalten einer Tabelle (T1 - T5) jeweils zumindest einen Musterindikator ermitteln, der eine Kenngröße für das Vorhandensein eines Musters in der jeweiligen Spalte einer Tabelle ist (S13);
- Mittels der Aggregationseinheit (4), Aggregieren mehrerer Musterindikatoren, die von unterschiedlichen trainierten Rechenmodulen (3.1 - 3.y) erzeugt wurden und sich jeweils auf dieselbe Spalte der jeweiligen Tabelle (T1 - T5) beziehen und Kombinieren dieser spaltenbezogenen Musterindikatoren, wodurch Kombinationsmusterindikatoren gebildet werden, die jeweils einer Spalte einer Tabelle (T1 - T5) zugeordnet sind (S14);
- Vergleichen der Kombinationsmusterindikatoren verschiedener Tabellen (T1 - T5), um Ähnlichkeitsbeziehungen zwischen zumindest einem Teil der Spalten der Tabellen (T1 - T5) herzustellen (S15);
- Mittels der Berechnungseinheit (5), Berechnen zumindest eines Ähnlichkeitswerts, der die Ähnlichkeit zwischen Spalten unterschiedlicher Tabellen (T1 - T5) charakterisiert und/oder Berechnen zumindest eines Ähnlichkeitswerts, der die Ähnlichkeit zwischen unterschiedlichen Tabellen (T1 - T5), die mehrere Spalten enthalten, charakterisiert basierend auf dem Vergleich der Kombinationsmusterindikatoren (S16).

2. Verfahren nach Anspruch 1, **dadurch gekennzeichnet, dass** durch das spaltenweise Verarbeiten und Abstrahieren der Informationen die Länge einer Zeichenkette, der Datentyp der Informationen, der Wertebereich der Informationen, das Verhältnis aus Buchstaben und Zahlen, ein Indikator bezüglich der Ähnlichkeit der Werte der Spalte und/oder die Häufigkeit des Vorhandenseins von Sonderzeichen ermittelt wird.

3. Verfahren nach Anspruch 1 oder 2, **dadurch gekennzeichnet, dass** die maschinell lernenden Rechenmodule (3.1 - 3.y) beim Training mit einem Teil der spaltenbezogenen Metadaten durch einen unüberwachten Lernprozess trainiert werden.

4. Verfahren nach einem der vorhergehenden Ansprüche, **dadurch gekennzeichnet, dass** das Training der maschinell lernenden Rechenmodule (3.1 - 3.y) in mehreren Schritten vollzogen wird, wobei in den Trainingsschritten jeweils eine Teilmenge der gesamten spaltenbezogenen Metadaten als Trainingsdaten verwendet werden und in aufeinanderfolgenden Trainingsschritten jeweils zumindest teilweise unterschiedliche Trainingsdaten durch Verändern der Teilmenge der gesamten spaltenbezogenen Metadaten verwendet werden.

5. Verfahren nach einem der vorhergehenden Ansprüche, **dadurch gekennzeichnet, dass** die maschinell lernenden Rechenmodule (3.1 - 3.y) zumindest teilweise neuronale Netze sind.

6. Verfahren nach einem der vorhergehenden Ansprüche, **dadurch gekennzeichnet, dass** beim Vergleichen der Kombinationsmusterindikatoren unterschiedlicher Spalten geprüft wird, wie hoch der Grad der Übereinstimmung der Kombinationsmusterindikatoren ist.

7. Verfahren nach einem der vorhergehenden Ansprüche, **dadurch gekennzeichnet, dass** semantische Tabelleneigenschaften basierend auf Spaltenbezeichnungen und/oder Tabellenbezeichnungen ermittelt werden.

8. Verfahren nach Anspruch 7, **dadurch gekennzeichnet, dass** der Ähnlichkeitswert, der die Ähnlichkeit zwischen Spalten unterschiedlicher Tabellen oder die Ähnlichkeit zwischen unterschiedlichen Tabellen charakterisiert, basierend auf den semantischen Tabelleneigenschaften ermittelt wird.

9. Verfahren nach einem der vorhergehenden Ansprüche, **dadurch gekennzeichnet, dass** die vortrainierten maschinell lernenden Rechenmodule (3.1 - 3.y) basierend auf Trainingsdaten, die von den spaltenbezogenen Metadaten der empfangenen Tabellen verschieden sind und vorgegebene Muster enthalten, vorab trainiert wurden.

10. Verfahren nach einem der vorhergehenden Ansprüche, **dadurch gekennzeichnet, dass** nach dem Berechnen des zumindest einen Ähnlichkeitswerts die maschinell lernenden Rechenmodule (3.1 -3.y) dadurch nachtrainiert werden, dass der berechnete Ähnlichkeitswert evaluiert und eine Evaluierungsinformation erzeugt wird und dass basierend auf der Evaluierungsinformation die maschinell lernenden Rechenmodule (3.1 - 3.y) und/oder das Bilden von Kombinationsmusterindikatoren angepasst werden.

11. Verfahren nach einem der vorhergehenden Ansprüche, **dadurch gekennzeichnet, dass** beim Bilden von Kombinationsmusterindikatoren die Musterindikatoren unterschiedlich gewichtet werden.

12. Verfahren nach einem der vorhergehenden Ansprüche, **dadurch gekennzeichnet, dass** basierend auf den Tabellen (T1 - T5) und den Ähnlichkeitsbeziehungen der Tabellen (T1 - T5) eine graphische Ausgabe erzeugt wird, die die Ähnlichkeitsbeziehungen der Gesamttabellen und der Spalten der einzelnen Tabellen (T1 - T5) darstellt.

13. Verfahren nach einem der vorhergehenden Ansprüche, dass bei einer Änderung der in den Tabellen (T1 - T5) enthaltenen Informationen die spaltenbezogenen Metadaten, die Musterindikatoren und die daraus resultierenden Kombinationsmusterindikatoren neu ermittelt und basierend darauf der Ähnlichkeitswert, der die Ähnlichkeit zwischen Spalten unterschiedlicher Tabellen (T1 - T5) und/oder die Ähnlichkeit zwischen unterschiedlichen Tabellen (T1 - T5) charakterisiert, neu berechnet werden.

14. Computerprogramm, umfassend Befehle, die bei der Ausführung des Programms durch einen Computer diesen veranlassen, die Schritte des Verfahrens nach einem der vorhergehenden Ansprüche auszuführen.
